# FASCICULE DE BREVET EUROPEEN

(11) **EP 2 678 277 B1**
(45) Date de publication et mention de la délivrance du brevet: **15.08.2018**
(21) Numéro de dépôt: 12709933.1
(22) Date de dépôt: 17.02.2012
(51) Int. Cl.: C02F 1/32

(54) **PROCEDE DE DEPOLLUTION DES FLUIDES**
VERFAHREN ZUM ENTFERNEN VON SCHADSTOFFEN AUS FLÜSSIGKEITEN
METHOD FOR REMOVING POLLUTANTS FROM FLUIDS

(30) Priorité: 24.02.2011 FR 1100547
(43) Date de publication de la demande: 01.01.2014
(73) Titulaire: Université d'Aix Marseille, 13284 Marseille Cedex 07 (FR)
(72) Inventeur: FARNET, Anne-Marie, F-13610 Le Puy Sainte Reparade (FR); CHEVREMONT, Anne-Cécile, F-13013 Marseille (FR); BOUDENNE, Jean-Luc, F-13009 Marseille (FR); COULOMB, Bruno, 13109 Simiane-Collongue (FR)
(74) Mandataire: Santarelli
(86) Numéro de dépôt international: PCT/FR2012/050351
(87) Numéro de publication internationale: WO 2012/114027

(56) Documents cités:
- WO-A1-2010/058607
- JP-A- 2006 205 098
- JP-A- 2008 272 616
- US-B1- 6 787 782
- US-B2- 8 324 595
- Christie Chatterley ET AL: "Demonstration and evaluation of germicidal UV-LEDs for point-of-use water disinfection", JOURNAL OF WATER AND HEALTH, vol. 08, no. 3, 1 September 2010 (2010-09-01), page 479, XP055336916, GB ISSN: 1477-8920, DOI: 10.2166/wh.2010.124
- Anonymous: "UV Lamps And Lamp Types", , 14 February 2006 (2006-02-14), XP055407586, Retrieved from the Internet: URL:https://web.archive.org/web/2006021421 0038/http://www.americanairandwater.com/la mps.htm [retrieved on 2017-09-18]

## Description

La présente demande concerne le domaine de la désinfection et de la dépollution de fluides, et plus particulièrement un procédé d'utilisation d'un réacteur pour abattre la quantité de microorganismes pathogènes dans un fluide et/ou diminuer la teneur en polluants. Par polluant on entend ici tout contaminant, ("polluant" et "contaminant" pourront être utilisés indifféremment dans le texte) dont le caractère indésirable peut être dû à sa nocivité (toxicité) pour la santé de l'organisme humain ou animal. Ainsi on entend dans le présent texte par polluant aussi bien des molécules organiques à base de carbone, d'hydrogène, et éventuellement d'oxygène, et/ou d'hétéroatomes tels que le soufre, l'azote et le phosphore, comme par exemple les substances pharmaceutiques, les pesticides ou toute autre molécule chimique, ainsi que des microorganismes pathogènes comme les virus, les bactéries, les moisissures, ou encore les protozoaires.

Par abattre ou diminuer on entend réduire au maximum voire supprimer tant que faire se peut la quantité de microorganismes pathogènes et/ou la teneur en polluants dans un fluide.

Les zones arides et semi-arides sont malheureusement limitées en quantité d'eau consommable par les populations qui les habitent. Par ailleurs dans les zones habitées l'activité humaine produit de plus en plus d'effluents pollués et particulièrement de l'eau impropre à la consommation, qu'il faut alors traiter avant de ne pouvoir la consommer de nouveau.

Ainsi le développement de nouvelles technologies pour la purification et le recyclage de l'eau devient une priorité.

Différents procédés ont été décrits dans l'art antérieur pour traiter les eaux usées afin de les réutiliser pour la consommation, l'hygiène, l'industrie ou encore l'agriculture.

Par exemple il a été proposé d'utiliser l'ozone, le chlore ou ses dérivés, ou encore des lampes émettant un rayonnement ultra-violet (lampes UV) basse pression (émettant à 254 nm) et des lampes moyenne pression (émettant majoritairement à 365 nm).

Ces procédés présentent des inconvénients selon la destination des eaux qui sont traitées par l'un de ces trois procédés.

Une eau chlorée ne peut être rejetée directement dans le milieu car le chlore est toxique pour l'écosystème ; le traitement à l'ozone est un procédé très couteux et qui ne peut être mis en place pour le traitement des eaux potables que dans les pays les plus développés ; la technologie UV utilisant des lampes a montré ses limites tant du point de vue du coût de mise en oeuvre, que du point de vue des sous-produits formés et de son efficacité limitée. De plus, les lampes UV utilisent du mercure, un composé hautement toxique ce qui peut entrainer des problèmes subséquents de pollution supplémentaire.

Il est connu que les radiations UV causent des lésions au niveau des acides nucléiques des microorganismes, pouvant ainsi empêcher leur réplication et la transcription de leur matériel génétique, bloquant ainsi leur multiplication et leur prolifération. Mais les microorganismes présentent la capacité de réparer les dégâts causés sur leurs acides nucléiques grâce à des enzymes de réparation. Ainsi sur une population irradiée une faible proportion de microorganismes échappe à la destruction et peut ainsi contaminer à nouveau le fluide qui vient d'être théoriquement décontaminé (phénomène de réparation à la lumière -"photo-repair"- ou à l'obscurité -"dark-repair"-).

Par ailleurs, de nombreuses molécules synthétiques et naturelles sont sensibles aux rayonnements UV qui induisent une transformation de ces molécules.

Par exemple les radiations UV causent des transformations photochimiques des polluants, mais peuvent aussi activer la production d'intermédiaires réactifs.

Ces intermédiaires sont appelés photoréactants : ils sont des oxydants puissants (radicaux hydroxyles -HO°-, les radicaux peroxyles, des peroxydes, etc) et très réactifs.

Le rayonnement UV est également connu pour oxyder les matières organiques, avec la production de molécules de faible poids moléculaire et de CO₂.

La présente invention vise à fournir un procédé utilisant un appareillage simple apte à permettre la dépollution des fluides par destruction des microorganismes et/ou des molécules organiques qui les polluent.

L'utilisation de diodes électroluminescentes (DELs) produisant des radiations UV présentent de nombreux avantages par rapport aux lampes UV. Les DELs émettent à une seule longueur d'onde (elles ne présentent pas un spectre diffus comme les lampes UV mercure moyenne pression) et il est ainsi de choisir la ou les longueurs d'onde idoines. Les autres intérêts sont économiques (la durée de vie des DELs est 10 à 100 fois supérieures à celles des lampes. Elles ne produisent que peu de chaleur ; elles ne nécessitent pas beaucoup d'énergie pour fonctionner et le rendement de conversion énergie électrique/dose UV émise est bien supérieur à celui des lampes courantes). Les DELs sont, de plus, résistantes aux chocs et pratiques de mise en oeuvre : il est beaucoup plus facile d'imaginer des configurations nouvelles de réacteurs UV avec des DELs qu'avec des lampes UV du faible de leur faible encombrement de l'orientation facilitée du rayonnement lumineux, des possibilités d'ajuster le nombre de DEL(s) au débit d'eau à traiter,...). De plus, elles présentent des avantages dans le domaine de la protection de l'environnement : les DELs ne contiennent pas de substances toxiques comme le mercure, et dans le contexte de la directive REACH qui vise notamment à substituer les composés toxiques par des composés moins toxiques, les DEL trouvent toutes leurs places.

On connaît dans l'art antérieur des études qui ont montré l'utilisation d'irradiations UV-DELs pour dépolluer, comme les études divulguées dans les documents WO2009/129993, US6,579,495, WO2009/006506, WO2010/028779, WO2007113537. Mais ces études ne permettent pas de surmonter les problèmes énoncés précédemment.

Le document WO 2010/058607A1 décrit un dispositif de purification des eaux usées comprenant une lampe UV émettant à la longueur d'ondes de 254 nm couplée à une diode électroluminescente de longueur d'onde 365 nm, ce dispositif permet un abattement des microorganismes de 3,7 log, en au moins 15 minutes sans reviviscence postérieure.

Le document Christie Chatterley et Al ; Journal of water and health, Volume 08, N° 3, 1 septembre 2010, page 479 décrit l'avantage de l'utilisation des diodes électroluminescentes par rapport à l'utilisation de lampes émettant dans les mêmes longueurs d'onde.

Une longueur d'onde de 254 nm est généralement utilisée dans l'art antérieur pour éliminer les bactéries. Ceci repose sur l'absorbance moyenne des quatre constituants de l'ADN (adénine, guanine, thymine et cytosine) mais également sur le fait que les lampes à mercure (basse pression), depuis très longtemps sur le marché, émettent à 254 nm. C'est pourquoi, depuis des années, cette longueur d'onde est réputée être la longueur d'onde germicide de référence.

Cependant, de nombreuses publications récentes ont mis en avant que les procédés de désinfection qui utilisaient cette seule longueur d'onde voyaient les bactéries se « réparer » ou « se revivifier » (reviviscence bactérienne) dès lors que le rayonnement UV est interrompu.

Il serait donc satisfaisant de pouvoir disposer d'un procédé utilisant un dispositif pour dépolluer les fluides utilisant des DELs, qui, d'une part, diminue de façon plus efficace la charge microbienne, particulièrement en ne permettant pas les phénomènes de réparation observés dans l'art antérieur et, d'autre part, soit apte à réduire la charge organique dudit fluide en détruisant les molécules organiques polluantes.

C'est un des buts de la présente invention que de fournir un tel procédé. Les inventeurs ont montré, de manière surprenante et après de longues recherches, que l'utilisation de certaines longueurs d'onde peut conduire à la destruction des polluants et particulièrement des microorganismes sans que ceux-ci ne soient capables de réparer leurs acides nucléiques.

De façon étonnante, les inventeurs ont notamment démontré l'efficacité d'une méthode de purification d'un fluide prétendument pollué dans laquelle ledit fluide est soumis à l'irradiation d'une première source émettant une lumière présentant un spectre étroit de longueur d'onde centrée à 280 nm, couplée de manière simultanée ou successive, à au moins l'irradiation d'une seconde source émettant une lumière présentant un spectre étroit de longueur d'onde centrée à 365 nm ou émettant une lumière présentant un spectre étroit de longueur d'onde centrée à 405 nm. Les inventeurs ont de plus montré qu'il est encore plus efficace de soumettre ledit fluide à l'irradiation d'une première source émettant une lumière présentant un spectre étroit de longueur d'onde centrée à 280 nm, couplée de manière simultanée ou successive, aux irradiations de deux sources émettant des lumières présentant un spectre étroit de longueur d'onde centrée à 365 nm et un spectre étroit de longueur d'onde centrée à 405 nm.

Les inventeurs ont démontré que cette méthode de purification est efficace lorsque les sources lumineuses sont des diodes électroluminescentes (DELs).

Par lumière présentant un spectre étroit de longueur d'onde centrée à 280 nm, 365 nm ou 405 nm on entend la lumière émise par la DEL qui présente un pic d'émission majoritaire à 280 nm, 365 nm ou 405 nm, ledit spectre pouvant s'étendre de part et d'autre de ce pic sur 30 nm, avantageusement 10 nm. Ainsi, une DEL émettant une lumière présentant un spectre étroit de longueur d'onde centrée à 280 nm, émettra en fait une lumière de longueur d'once comprise entre 250 nm et 310 nm avantageusement entre 270 nm et 290 nm. De même une DEL émettant une lumière présentant un spectre étroit de longueur d'onde centrée à 365 nm, émettra en fait une lumière de longueur d'onde comprise entre 335 nm et 385 nm avantageusement entre 355 nm et 375 nm, et une DEL émettant une lumière présentant un spectre étroit de longueur d'onde centrée à 405 nm, émettra en fait une lumière de longueur d'onde comprise entre 375 nm et 435 nm avantageusement entre 395 et 415 nm. Les inventeurs proposent une méthode de purification desdits fluides dans laquelle ledit fluide est soumis à l'irradiation d'au moins deux sources lumineuses de longueurs d'onde différentes. Un réacteur pour mettre en oeuvre le procédé de l'invention comprend au moins une première DEL capable d'émettre une lumière présentant un spectre étroit de longueur d'onde centrée à 280 nm, et au moins une seconde DEL capable d'émettre une lumière présentant un spectre étroit de longueur d'onde centrée à 365 nm ou à 405 nm.

Selon une variante ledit réacteur peut comprendre au moins 3 DELs émettant respectivement une lumière présentant un spectre étroit de longueur d'onde respectivement centrée à 280 nm, 365 nm et 405 nm.

Bien entendu, pour chaque longueur d'onde, la source peut être constituée par 1 DEL ou par une série de DELs identiques, le nombre de DELs utilisées pour chaque longueur d'onde pouvant être identique ou différent. A titre d'exemple on peut décrire un réacteur comprenant 50 DELs présentant un spectre étroit de longueur d'onde centrée à 280 nm, 70 DELs présentant un spectre étroit de longueur d'onde centrée à 365 nm et 80 DELs présentant un spectre étroit de longueur d'onde centrée à 405 nm. Ainsi par la suite dans le texte si l'on utilise l'expression "série de DELs", cela signifiera que le réacteur considéré pourra comporter de 1 à 1000 DELs, voire plus. Ainsi une source lumineuse au sens du présent texte peut être constituée d'une ou de plusieurs DELs.

Par réacteur on entend un contenant apte à recevoir pendant un temps défini un fluide à dépolluer, ledit contenant étant en outre équipé de DELs dont l'action sur le fluide prétendument pollué va conduire à la dépollution dudit fluide.

Les DELs faisant partie du réacteur sont de préférence des DELs du commerce. On citera par exemple une DEL-UV émettant à 280 nm avec une puissance comprise entre 400 µW et 550 µW, une DEL-UV émettant à 365 nm avec une puissance égale à 75 mW ou une DEL-UV émettant à 405 nm avec une puissance égale à 210 mW. A titre d'exemple on citera les DEL provenant de chez Seoul Optidevice Co., LTD (Corée du Sud), de chez Nichia Corporation (Japon), ou encore de chez SunLED Corporation (Etats-Unis). Les DELs pourront être disposées au niveau du réacteur soit de telle sorte qu'elles ne soient pas au contact direct du fluide à dépolluer soit de telle sorte qu'elles soient au contact ou immergées dans ledit fluide. Le réacteur peut en outre comprendre au moins une entrée pour le fluide à dépolluer, et au moins une sortie pour le fluide dépollué. Selon cette variante, l'entrée du fluide et la sortie du fluide peuvent être disposées à des extrémités opposées du réacteur.

La forme, la matière, et les dimensions du réacteur peuvent être quelconques.

Le réacteur peut prendre toutes les formes voulues et toutes les dimensions voulues, qui seront adaptées par l'Homme du métier en fonction de l'usage envisagé du réacteur. Le réacteur peut particulièrement être un récipient, ouvert ou fermé, dans lequel le fluide à dépolluer peut stagner ou circuler tout en restant au contact des lumières des DELs le temps nécessaire à une complète dépollution.

Comme exemples non limitatifs de matières pouvant constituer le réacteur, on peut citer, les polymères (dont les plastiques), le métal, le béton, le verre, le quartz, l'acier inoxydable ou toute combinaison de ces matériaux.

Selon une variante, le réacteur peut être un réservoir, ouvert ou fermé, dans lequel le fluide à dépolluer est stocké, ledit réservoir étant équipé d'au moins deux série de DELs dont une émettant obligatoirement une lumière présentant un spectre étroit de longueur d'onde centrée à 280 nm et l'autre émettant une lumière présentant un spectre étroit de longueur d'onde centrée à 365 nm ou 405 nm. Avantageusement dans cette variante le réacteur pourra comprendre trois séries de DELs émettant des lumières présentant des spectres étroits de longueurs d'onde centrées à 280 nm, 365 nm et 405 nm.

Selon une autre variante, le réacteur peut être un réservoir, ouvert ou fermé, dans lequel le fluide à dépolluer circule, ledit réservoir étant équipé d'au moins deux séries de DELs dont une émettant obligatoirement une lumière présentant un spectre étroit de longueur d'onde centrée à 280 nm et l'autre émettant une lumière présentant un spectre étroit de longueur d'onde centrée à 365 nm ou 405 nm. Avantageusement dans cette variante le réacteur pourra comprendre trois séries de DELs émettant des lumières présentant des spectres étroits de longueurs d'onde centrées à 280 nm, 365 nm et 405 nm.

Une forme particulièrement adaptée au réacteur est celle d'un tube dans lequel le fluide pourra circuler, ledit tube portant les différentes DELs de place en place sur sa longueur, dans des orifices de sorte que l'émission de lumière se fait vers l'intérieur du tube où circule le fluide à dépolluer. Dans une variante les DELs seront positionnées sur un support disposé à l'intérieur dudit tube au contact du fluide à dépolluer. Le réacteur peut en outre comprendre tout dispositif utile à son bon fonctionnement et/ou à sa sécurité, comme par exemple des vannes d'entrée et/ou de sortie, une vanne d'arrêt de circulation de l'effluent, une ou des pompe(s) de circulation, un ou des capteur(s) d'intensité lumineuse, un dispositif de mesure de la transmittance ou de la turbidité de l'eau à dépolluer, un dispositif de mesure de la pression, un dispositif de mesure de l'abattement en contaminant ou encore un dispositif de mesure de la température.

Il est notable que le réacteur peut en outre comprendre toute autre DEL émettant une lumière de longueur d'onde donnée qu'il pourrait être utile d'ajouter au dispositif.

Le fluide à dépolluer peut être tout liquide pollué dont la dépollution est nécessaire avant rejet et/ou réutilisation. On pense avant toute chose, mais sans limitation, aux eaux usées, civiles ou industrielles avant leur rejet dans le milieu naturel et/ou leur réutilisation pour des usages domestiques, d'irrigation ou d'arrosage des espaces verts. Le réacteur pour mettre en oeuvre le procédé de l'invention et/ou la méthode selon l'invention peuvent aussi permettre la dépollution des eaux brutes destinées à la consommation humaine (dépollution des eaux de puits ou de forages, alimentation en eau de zones en voie de développement), ou les eaux d'abreuvage dans les fermes) mais également la désinfection des eaux de piscines.

Les fluides à dépolluer peuvent également être des gaz qui, avant d'être rejetés ou inhalés, doivent être garantis sans polluant. On pense particulièrement, mais sans limitation, aux gaz utilisés dans les établissements hospitaliers.

L'invention a pour objet un procédé de dépollution d'un fluide prétendument pollué caractérisé en ce que l'on soumet, pendant un temps donné, ledit fluide au rayonnement, simultanément ou successivement, d'une première source émettant une lumière présentant un spectre étroit de longueur d'onde centrée à 280 nm, et à au moins le rayonnement d'une seconde source émettant une lumière présentant un spectre étroit de longueur d'onde centrée à 365 nm ou émettant une lumière présentant un spectre étroit de longueur d'onde centrée à 405 nm, ledit rayonnement étant émis par des diodes électroluminescentes (DEL). Avantageusement les irradiations ont lieu de manière simultanée. Encore plus avantageusement ledit fluide est soumis, simultanément ou successivement, audits rayonnements des 3 sources de lumières.

Selon le procédé de l'invention ledit fluide est soumis aux rayonnements pendant un temps compris entre 5 secondes et 60 secondes. Des objets, caractéristiques et avantages de l'invention ressortent des exemples et des figures qui suivent. Une partie des exemples est en dehors de la portée de l'invention définie par les revendications.
- La figure 1 présente l'abattement en bactéries mésophiles après 60 secondes d'irradiation en fonction des longueurs d'onde des DELs ou couple de DELs utilisés ; et
- La figure 2 présente la réactivation relative en bactéries mésophiles observée 20h après l'arrêt des irradiations, en fonction des longueurs d'onde des DELs utilisées lors des irradiations de 60 secondes.

### Exemples

### Exemple 1

### Matériel et méthodes

### Bactéries et conditions de culture

Trois souches *d'Escherichia Coli,* ATCC11303, ATCC 15597 et CIP 6224 ont été utilisées dans les essais.

Après ensemencement les cultures sont poursuivies pendant 3 heures dans du milieu de culture L. Broth. Après 15 minutes de centrifugation à 10000 tours/minutes la densité optique des cultures est ajustée à 0,100 (10⁷ CFU/ml) dans du tampon phosphate pH 6 ou en tampon tris(hydroxymethyl)aminométhane) à pH 8.

### Réacteur

Un circuit électrique alimentant 3 DELS émettant à des longueurs d'onde de 280 nm, 365 nm et 405 nm a été réalisé. Les DELs sont utilisées à leur ampérage maximal. Du fait de leurs longueurs d'onde d'émission respectives ces DELs présentent un maximum d'intensité de 77 mA, 22 mA et 46 mA. Ces intensités correspondent à des puissances émises pour des temps de 10, 20, 30, 60, 120 et 180 secondes, de 5,5 mJ, 11 mJ, 16,5 mJ, 33 mJ, 66 mJ et 99 mJ pour la DEL émettant à 280 nm, de 750, mJ, 1,5 J, 2,25 J, 4,5 J, 9 J et 13,5 J pour la DEL émettant à 365 nm et de 2,1 J, 4,2 J, 6,3 J 12,6 J, 25,2 J et 37,8 J pour la DEL émettant à 405 nm.

Durant l'essai, 10 ml de culture bactérienne à 10⁵ CFU/ml ont été placés dans des boites de Pétri de 55 mm de diamètre et exposés soit indépendamment à chacun des rayonnements des DELs soit aux rayonnements de couples de DELs 280 nm/365 nm, 280nm/405 nm. Les cultures bactériennes ont été maintenues à une distance de 1 cm des DELs. Durant l'essai les cultures sont maintenues en constante agitation.

### Comptage

Après irradiation UV, 1 ml de chaque culture est dilué 10 fois puis étalée sur un milieu Tryptone Soy Agar (TSA) puis incubée pendant 24h à 37°C. Les colonies bactériennes sont alors comptées sur chaque boite.

Les cultures irradiées ont été maintenues 20 h supplémentaires en culture à 37°C puis diluées et étalées sur un milieu Tryptone Soy Agar (TSA) puis incubées pendant 24h à 37°C afin d'évaluer la capacité de "réactivation" (évaluation du taux de réparation des acides nucléiques par la bactérie après irradiation).

### Polluants chimiques :

Des essais réalisés comme pour les bactéries ont été réalisés avec des solutions de créatinine et de phénol à 20 mg/l ajustées à pH 6 dans du tampon phosphate ou en tampon tris(hydroxymethyl)aminométhane) à pH 8.

Les temps d'exposition sont les mêmes que pour les essais sur les bactéries. Les valeurs de turbidité testées étaient de 10, 20 ou 40 NTU (Nephelometric Turbidity Unit) en utilisant une solution à 4000 NTU de formazin (Hach Company).

### Analyse chimique

Les solutions à 20 mg/l de créatinine et de phénol ont été exposées au rayonnement des DELs du réacteur décrit précédemment. Ces essais ont pour but de mimer la photooxydation de toute molécule chimique pouvant être présente dans les eaux usées des villes. Chaque échantillon est analysé par HPLC et la surface des pics obtenus pour chaque échantillon comparée à la surface des pics obtenus pour les mêmes échantillons non irradiés.

Le pourcentage de disparition du produit est alors calculé.

### Résultats

### Cultures bactériennes

Les résultats sont présentés dans le tableau suivant :

| | | | | CIP 6224 | ATCC 11303 | ATCC 15597 |
|---|---|---|---|---|---|---|
| λ nm | Temps d'exposition (s) | pH | Densité (CFU/ml) | % de disparition | % de disparition | % de disparition |
| 280 | 60 | 8 | 10⁵ | 98,00 | 95,75 | 78,00 |
| 280 | 120 | 6 | 10⁷ | 99,99 | 99,99 | 95,00 |
| 365 | 60 | 8 | 10⁷ | 97,00 | 86,65 | 55,00 |
| 365 | 120 | 6 | 10⁵ | 60,00 | 100,00 | 87,00 |
| 405 | 60 | 6 | 10⁷ | 97,00 | 87,13 | 10,00 |
| 405 | 120 | 8 | 10⁵ | 70,00 | 99,43 | 50,00 |
| 280/405 | 60 | 6 | 10⁷ | 100,00 | 99,86 | 74,50 |
| 280/405 | 180 | 8 | 10⁵ | 100,00 | 99,95 | 99,25 |
| 280/365 | 120 | 8 | 10⁷ | 99,99 | 99,89 | 91,50 |
| 280/365 | 180 | 6 | 10⁵ | 100,00 | 100,00 | 100,00 |

Ces résultats montrent la plus grande efficacité d'une double irradiation à 280 nm et 365 ou 405 nm.

Ces résultats montrent qu'aucun phénomène de réactivation n'est observé lorsque l'on réalise un couplage 280/365 nm ou 280/405 nm et si le temps d'exposition à ces longueurs d'onde est supérieur ou égal à 60 secondes. De plus, selon le type de microorganismes, l'abattement en microorganismes est supérieur après 20h, comparé à ce qu'il était tout de suite après l'arrêt de l'irradiation.

Les résultats présentés ci-dessous montrent qu'aucun phénomène de réactivation n'est observée lorsque l'on réalise un couplage 280/365 nm ou 280/405 nm et si le temps d'exposition à ces longueurs d'onde est inférieur ou égal à 60 secondes. De plus, selon le type de microorganismes, l'abattement en microorganismes est supérieur après 20h, comparé à ce qu'il était tout de suite après l'arrêt de l'irradiation.

| Escherichia coli (souche ATCC 11303) | | | |
|---|---|---|---|
| Temps d'exposition (s) | λ nm | Abattement à T0 (en log) | Abattement après 20h (log) |
| 10 | 280 | 4 | 3,8 |
| 20 | 280 | 4,3 | 7 |
| 30 | 280 | 4,3 | 7 |
| 10 | 365 | 3,7 | 2,4 |
| 20 | 365 | 3,7 | 2,7 |
| 30 | 365 | 4 | 2,7 |
| 10 | 405 | 4 | 2,9 |
| 20 | 405 | 4,5 | 3 |
| 30 | 405 | 4,5 | 3,3 |
| 10 | 280/405 | 1,8 | 1,5 |
| 20 | 280/405 | 4,3 | 4,3 |
| 30 | 280/405 | 4,7 | 7 |
| 10 | 280/365 | 3,8 | 4,3 |
| 20 | 280/365 | 4 | 7 |
| 30 | 280/365 | 4 | 7 |

On constate que pour 280 nm et pour les couplages 280/405, 280/365, on n'observe pas de réactivation et que l'inactivation des microorganismes a continué malgré l'absence d'irradiations.

En revanche, on constate que pour les longueurs d'onde 280, 365 et 405, longueurs d'onde employées seules, on observe un phénomène de réparation puisque les abattements observés diminuent lorsque 20h se sont écoulés après l'arrêt des irradiations.

### Composés chimiques

Les résultats sont présentés dans le tableau suivant

| Turbidité | pH | Temps d'exposition (s) | λ nm | % d'oxydation du phénol | % d'oxydation de la créatinine |
|---|---|---|---|---|---|
| 10 | 8 | 120 | 280 | 11,90 | 12,59 |
| 20 | 6 | 180 | 280 | 17,63 | 14,38 |
| 10 | 8 | 60 | 365 | 10,51 | 15,36 |
| 20 | 6 | 120 | 365 | 12,74 | 22,28 |
| 40 | 8 | 180 | 365 | 7,86 | 7,91 |
| 20 | 8 | 60 | 405 | 4,09 | 8,25 |
| 40 | 6 | 120 | 405 | 7,89 | 20,24 |
| 10 | 6 | 180 | 405 | 8,37 | 27,72 |
| 40 | 6 | 60 | 280/405 | 9,77 | 27,22 |
| 20 | 8 | 120 | 280/405 | 12,42 | 11,47 |
| 40 | 8 | 60 | 280/365 | 4,66 | 12,15 |
| 10 | 6 | 120 | 280/365 | 11,99 | 23,93 |

### Exemple 2

### Matériel et méthode

### Echantillonnage

Des échantillons d'eaux usées ont été prélevés autant de fois que nécessaire à la sortie d'une station d'épuration d'eaux usées domestiques avant son rejet dans un cours d'eau. Le temps du trajet entre la station d'épuration et le laboratoire, les échantillons sont conservés à 4°C dans une glacière.

Caractérisation des échantillons avant et après irradiation

Les échantillons sont ensemencés sur un milieu gélosé pour l'énumération des microorganismes mésophiles (norme ISO 6222). Les cultures sont ensuite incubées pendant 24h à 37 °C avant l'énumération des bactéries présentes.

### Expérimentations

10 mL des échantillons d'eaux usées sont irradiés pendant 60 secondes avec des DELs utilisées seules ou par deux (254, 280, 365, 405 nm). Les DELs sont situées à 1 cm de distance des solutions placées dans des boîtes de Pétri de 55 mm de diamètre. Chaque expérimentation est répétée 3 fois.

Pour les expérimentations concernant l'étude des phénomènes de réactivation, les échantillons ayant subis les irradiations UV sont conservés à 20°C (température ambiante) et à la lumière du jour (afin de simuler les conditions du « light-repair »). Les échantillons sont à nouveau analysés au bout de 20h (suivant le protocole présenté plus haut dans la partie « caractérisation des échantillons avant et après irradiation »).

### Résultats

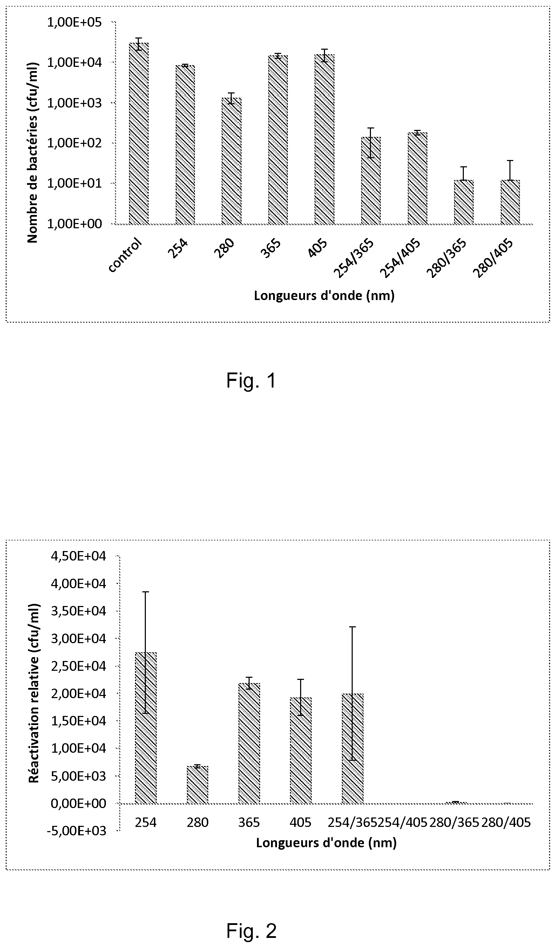

Les figures 1 et 2 présentent les résultats obtenus, plus précisément l'effet de différents types d'irradiation, d'une part, sur la diminution du nombre de bactéries mésophiles provenant d'échantillons d'eaux usées, et d'autre part, sur leur réactivation (ou reviviscence) vingt heures après l'arrêt des irradiations.

La Figure 1 présente l'abattement en bactéries mésophiles observé après 60 secondes d'irradiation en fonction des longueurs d'onde des DELs ou couple de DELs utilisés. Cette Figure illustre le fait que, contrairement aux idées reçues, une irradiation à une seule longueur d'onde 280 nm est plus efficace pour éliminer des bactéries, par rapport à la longueur d'onde 254 nm. 280 nm est également plus efficace que les longueurs d'onde 365 nm et 405 nm. Cette figure montre également qu'une irradiation à l'aide d'une association de deux DELs, émettant une lumière à 280nm/365nm ou 280nm/405nm, est encore plus efficace pour diminuer le nombre de bactéries que la seule longueur d'onde à 280nm et plus efficace que l'association de deux DELs émettant une lumière à 254 nm/365 nm et 254 nm/365 nm (reviviscence).

La figure 2 présente la réactivation relative en bactéries mésophiles observée 20h après l'arrêt des irradiations, en fonction des longueurs d'onde des DELs utilisées lors des irradiations de 60 secondes.

Cette figure montre que l'on observe :
- une reviviscence bactérienne pour les longueurs d'onde 254 nm, 280 nm (c'est la longueur d'onde qui employée seule permet le moins de reviviscence), 365 nm et 405 nm, pour le couple 254/365,
- à une très légère reviviscence bactérienne pour le couple 280/365 nm (mais statistiquement non significative), et
- à aucune reviviscence bactérienne pour les couples 254/405 et 280/405.

Cet exemple montre que si l'on cumule les effets inactivation et absence de réactivation bactérienne, c'est bien le couplage 280/405 nm qui est le meilleur, suivi de très près par le couplage 280/365 nm.

## Revendications

1. Procédé de dépollution d'un fluide prétendument pollué, **caractérisé en ce qu'**on soumet, pendant un temps compris entre 5 et 60 secondes, ledit fluide au rayonnement, simultanément ou successivement, d'une première source émettant une lumière présentant un spectre étroit de longueur d'onde centrée à 280 nm, et à au moins au rayonnement d'une seconde source émettant une lumière présentant un spectre étroit de longueur d'onde centrée à 365 nm ou émettant une lumière présentant un spectre étroit de longueur d'onde centrée à 405 nm, ledit rayonnement étant émis par des diodes électroluminescentes (DEL).

2. Procédé selon la revendication 1, **caractérisé en ce que** ledit fluide est soumis simultanément ou successivement, au rayonnement d'une première source émettant une lumière présentant un spectre étroit de longueur d'onde centrée à 280 nm, aux rayonnements de sources émettant une lumière présentant un spectre étroit de longueur d'onde centrée à 365 nm et à 405 nm.

3. Procédé selon l'une quelconque des revendications 1 ou 2, **caractérisé en ce que** ledit fluide est pollué par des polluants chimiques et/ou par des microorganismes.

## Patentansprüche

1. Verfahren zum Entfernen von Schmutzstoffen aus einem vermutlich verschmutzten Fluid, **dadurch gekennzeichnet, dass** das genannte Fluid für eine Zeit zwischen 5 und 60 Sekunden Strahlung, gleichzeitig oder aufeinanderfolgend, von einer ersten Quelle, die Licht mit einem auf 280 nm zentrierten schmalen Wellenlängenspektrum emittiert, und wenigstens einer Strahlung von einer zweiten Quelle, die Licht mit einem auf 365 nm zentrierten schmalen Wellenlängenspektrum oder Licht mit einem auf 405 nm zentrierten schmalen Wellenlängenspektrum emittiert, ausgesetzt wird, wobei die genannte Strahlung durch Leuchtdioden (LED) emittiert wird.

2. Verfahren nach Anspruch 1, **dadurch gekennzeichnet, dass** das genannte Fluid gleichzeitig oder aufeinanderfolgend Strahlung von einer ersten Quelle, die Licht mit einem auf 280 nm zentrierten schmalen Wellenlängenspektrum emittiert, Strahlungen von Quellen, die ein Licht mit einem auf 365 nm und auf 405 nm zentrierten schmalen Wellenlängenspektrum emittieren, ausgesetzt wird.

3. Verfahren nach einem der Ansprüche 1 oder 2, **dadurch gekennzeichnet, dass** das genannte Fluid durch chemische Schmutzstoffe und/oder durch Mikroorganismen verschmutzt ist.

## Claims

1. Method for removing pollutants from a fluid that may be polluted, **characterized in that**, for a period comprised between 5 and 60 seconds, said fluid is simultaneously or successively subjected to radiation from a first source emitting a light having a narrow wavelength spectrum centred at 280 nm, and at least radiation from a second source emitting a light having a narrow wavelength spectrum centred at 365 nm or emitting a light having a narrow wavelength spectrum centred at 405 nm, said radiation being emitted by light-emitting diodes (LEDs).

2. Method according to claim 1, **characterized in that** said fluid is simultaneously or successively subjected to radiation from a first source emitting a light having a narrow wavelength spectrum centred at 280 nm, to radiation from sources emitting a light having a narrow wavelength spectrum centred at 365 nm and at 405 nm.

3. Method according to any one of claims 1 or 2, **characterized in that** said fluid is polluted by chemical pollutants and/or by microorganisms.
